(19) Europäisches Patentamt
European Patent Office
Office européen des brevets

(11) **EP 2 615 394 A1**

(12) **DEMANDE DE BREVET EUROPEEN**

(43) Date de publication:
**17.07.2013 Bulletin 2013/29**

(51) Int Cl.:
***F25B 49/02*** *(2006.01)*

(21) Numéro de dépôt: **13150931.7**

(22) Date de dépôt: **11.01.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **12.01.2012 FR 1250303**

(71) Demandeur: **COMMISSARIAT A L'ENERGIE ATOMIQUE ET AUX ENERGIES ALTERNATIVES 75015 Paris (FR)**

(72) Inventeurs:
• **Bonne, François 38000 GRENOBLE (FR)**
• **Bonnay, Patrick 38500 Voiron (FR)**

(74) Mandataire: **Novaimo Bâtiment Europa 2 310 avenue Marie Curie Archamps Technopole 74166 Saint Julien en Genevois Cedex (FR)**

(54) **Procédé de commande d'un dispositif de compression d'un fluide caloporteur d'une machine cryogénique**

(57) Procédé de commande d'un dispositif de compression (3) d'un fluide caloporteur d'une machine cryogénique (1), le dispositif de compression comprenant plusieurs organes dont un compresseur (4) et une première vanne commandée (CV956) montés en parallèle, caractérisé en ce qu'il comprend la génération en temps réel d'une commande du compresseur et la génération en temps réel d'une commande de la première vanne commandée.

FIG.1

**Description**

La présente invention concerne un procédé de commande ou de fonctionnement d'un dispositif de compression d'un fluide caloporteur d'une machine frigorifique de type cryogénique. L'invention porte aussi sur un dispositif de compression d'un fluide caloporteur d'une machine frigorifique de type cryogénique. L'invention porte encore sur une machine frigorifique de type cryogénique.

La majorité des grandes machines cryogéniques conçues à l'heure actuelle ne sont pas destinées à refroidir des charges thermiques fortement variables. Une minorité d'entre elles voient donc leur charge thermique appliquée fortement varier pendant le fonctionnement. Quelle que soit l'application (charge thermique constante ou charge thermique variable), les machines cryogéniques sont dimensionnées et conçues de la même manière, c'est-à-dire telles qu'elles puissent fournir la charge maximale, en fonctionnant toujours à plein régime. Cela paraît adapté lorsque la charge varie peu. Mais, *a contrario*, lorsque la charge est variable (par exemple dans une application de refroidissement des aimants supraconducteurs pour la fusion), cela pose trois problèmes :

- un surcoût lié au dimensionnement pour fournir la puissance maximale en permanence.
- un surcoût lié à l'exploitation, lié à la consommation énergétique.
- de fortes agitations des variables normalement contrôlées, impactant ainsi les systèmes qui en dépendent.

Une machine cryogénique, notamment un cryoréfrigérateur, comprend un dispositif de compression de fluide aussi appelé « zone chaude ». Ce dispositif de compression a pour fonction de générer un flux de fluide caloporteur, par exemple d'hélium gazeux, sous haute pression, à température ambiante. Ce flux de fluide est ensuite absorbé et refoulé sous basse pression par un autre sous-ensemble, appelé « boîte froide » dans lequel se trouve la charge à refroidir.

Le dispositif de compression est par exemple équipé de différents actionneurs : trois vannes et un compresseur. La zone chaude est également équipée de trois capteurs : les deux pressions à réguler et le débit sortant vers la boîte froide. Notons que le débit entrant dans la zone chaude n'est normalement pas mesurable. Dans la stratégie de commande actuelle, une vanne dite de bypass, montée en parallèle du compresseur, sert à rediriger vers une zone de basse pression le fluide comprimé qui n'est pas absorbé par la boîte froide. Des vannes dites « d'apport » et « de retrait » servent respectivement à ajouter ou retirer du fluide dans le circuit de circulation de celui-ci entre la boîte froide et la zone chaude. Le fluide apporté est retiré d'une capacité tampon. Le fluide retiré est stocké dans la capacité tampon. Les besoins des applications utilisant une telle machine cryogénique sont tels que les pressions haute et basse de la zone chaude puissent suivre des évolutions données ou à défaut qu'elles puissent rester constantes quel que soit l'état de sollicitation de la boîte froide.

Un tel fonctionnement génère un gaspillage d'énergie. En effet, lorsque la machine est en sous charge, l'énergie transférée au fluide au niveau du compresseur et non utilisée dans la boîte froide est dissipée au niveau de la vanne de bypass.

On connaît par exemple du document FR2943768 l'utilisation d'un contrôleur basé sur des équations linéarisées d'un système frigorifique, autour d'un point de fonctionnement, pour contrôler des pressions. Ce contrôleur est non adapté si le procédé se trouve à un autre point de fonctionnement. La vanne de bypass est ouverte en permanence ou en quasi permanence, ce qui conduit au gaspillage évoqué précédemment.

Le but de l'invention est de fournir un procédé de fonctionnement ou de commande permettant de remédier aux problèmes évoqués précédemment et améliorant les procédés connus de l'art antérieur. En particulier, l'invention propose un système permettant d'assurer un fonctionnement d'un dispositif de compression répondant aux exigences requises par l'utilisation de la machine cryogénique, tout en évitant les gaspillages d'énergie. L'invention porte aussi sur un dispositif de compression fonctionnant conformément à un tel procédé.

Selon l'invention, le procédé permet de commander un dispositif de compression d'un fluide caloporteur d'une machine cryogénique, en particulier d'une machine cryogénique. Le dispositif de compression comprend plusieurs organes dont un compresseur et une première vanne commandée montés en parallèle. Le procédé comprend la génération en temps réel d'une commande du compresseur et la génération en temps réel d'une commande de la première vanne commandée.

Les organes du dispositif de compression peuvent comprendre une deuxième vanne commandée et une troisième vanne commandée, la deuxième vanne commandée, un réservoir de fluide caloporteur et la troisième vanne commandée étant montés en série et faisant partie d'un ensemble monté en parallèle du compresseur et le procédé peut comprend la génération en temps réel d'une commande de la deuxième vanne commandée et la génération en temps réel d'une commande de la troisième vanne commandée.

La génération en temps réel d'au moins une commande d'un organe peut comprendre l'utilisation de la fonction de transfert statique réciproque de l'organe.

On peut modifier la commande d'un premier organe, lorsqu'un calcul de commande d'un deuxième organe établit une valeur de commande impossible à exécuter.

La génération en temps réel d'au moins une commande d'un organe peut comprendre l'utilisation d'une estimation d'au moins une valeur d'une variable du dispositif de compression.

Le procédé peut comprendre la génération d'au moins une valeur de commande de prépositionnement.

Le procédé peut comprendre l'utilisation d'un contrôleur linéaire.

Le procédé peut comprendre l'utilisation d'un observateur non linéaire.

Selon l'invention, un dispositif de compression d'un fluide caloporteur d'une machine cryogénique comprend plusieurs organes dont un compresseur et une première vanne commandée montés en parallèle. Le procédé comprend des éléments matériels et/ou logiciels de mise en oeuvre du procédé défini précédemment.

Les éléments matériels et/ou logiciels peuvent comprendre un élément de génération en temps réel d'une commande du compresseur et un élément de génération en temps réel d'une commande de la première vanne commandée.

Le dispositif de compression peut comprendre une deuxième vanne commandée et une troisième vanne commandée, la deuxième vanne commandée, un réservoir de fluide caloporteur et la troisième vanne commandée étant montés en série et faisant partie d'un ensemble monté en parallèle du compresseur et les éléments matériels et/ou logiciels peuvent comprendre un élément de génération en temps réel d'une commande de la deuxième vanne commandée et un élément de génération en temps réel d'une commande de la troisième vanne commandée.

Les éléments matériels et/ou logiciels peuvent comprendre un élément d'utilisation de la fonction de transfert statique réciproque de l'organe.

Les éléments matériels et/ou logiciels peuvent comprendre un élément de modification de la commande d'un premier organe lorsqu'un calcul de commande d'un deuxième organe établit une valeur de commande impossible à exécuter par le deuxième organe.

Les éléments matériels et/ou logiciels peuvent comprendre un observateur d'au moins une valeur d'une variable du dispositif de compression.

Les éléments matériels et/ou logiciels peuvent comprendre un contrôleur.

Selon l'invention, une machine cryogénique comprend un dispositif de compression défini précédemment.

Le dessin annexé représente, à titre d'exemple, deux modes de réalisation d'un dispositif de compression selon l'invention.

La figure 1 est un schéma hydraulique d'un premier mode de réalisation d'un dispositif de compression selon l'invention.

La figure 2 est un schéma de l'architecture automatique du mode de réalisation d'un dispositif de compression selon l'invention.

La figure 3 est un schéma illustrant les non linéarités d'un organe d'un dispositif de compression.

La figure 4 est un graphique temporel des évolutions de la valeur de la haute pression de fluide dans le mode de réalisation du dispositif de compression selon l'invention.

La figure 5 est un graphique temporel des évolutions de la valeur de la basse pression de fluide dans le mode de réalisation du dispositif de compression selon l'invention.

La figure 6 est un graphique temporel des évolutions de la fréquence de rotation du compresseur et des ouvertures de vannes d'apport et de retrait dans le mode de réalisation du dispositif de compression selon l'invention.

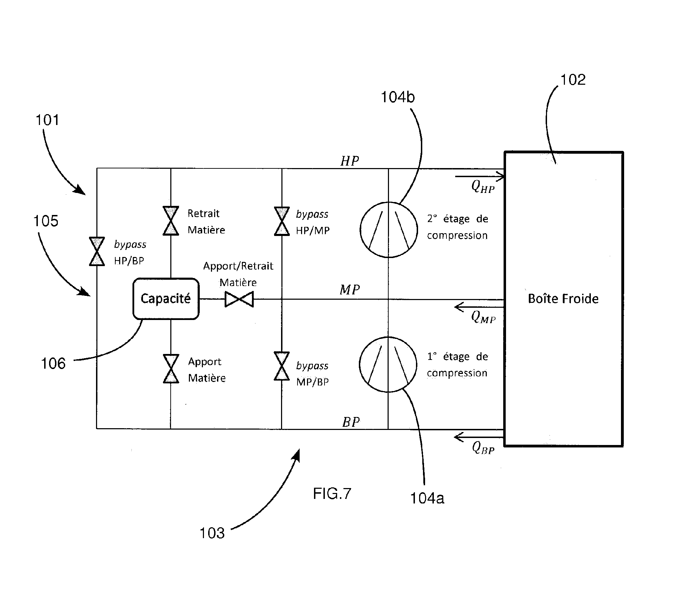

La figure 7 est un schéma hydraulique d'un deuxième mode de réalisation d'un dispositif de compression selon l'invention.

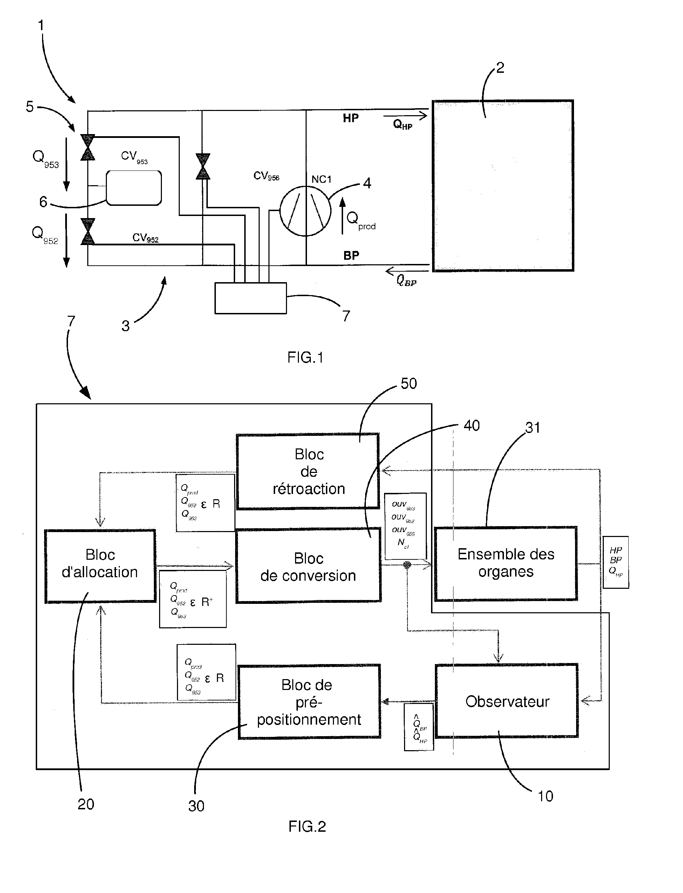

Un mode de réalisation d'une machine cryogénique 1 est décrit ci-après en référence à la figure 1.

La machine cryogénique 1 comprend principalement un dispositif de compression 3 d'un fluide caloporteur, comme de l'hélium, et une boîte froide 2 comprenant un détendeur et dans laquelle se trouve une charge thermique à refroidir.

Le dispositif de compression a pour fonction de générer un flux QHP de fluide caloporteur sous haute pression HP. En sortie de la boîte froide, on recueille un flux QBP de fluide caloporteur sous basse pression BP. Le dispositif de compression comprend plusieurs organes dont un compresseur 4 et une première vanne commandée CV956 montés hydrauliquement en parallèle. Eventuellement, les organes du dispositif de compression comprennent aussi une deuxième vanne commandée CV952 et une troisième vanne commandée CV953. La deuxième vanne commandée, un réservoir

6 de fluide caloporteur et la troisième vanne commandée sont montés en série hydrauliquement et font partie d'un ensemble monté hydrauliquement en parallèle du compresseur.

La zone chaude peut également être équipée de trois capteurs : un capteur de haute pression HP, un capteur de basse pression BP et un capteur de débit entrant dans la boîte froide QHP. Le débit entrant dans la zone chaude peut ne pas être mesuré. La vanne CV956 permet de rediriger du fluide d'une zone de haute pression en aval du compresseur à une zone de basse pression en amont du compresseur. Les vannes CV952 et CV953 servent respectivement à ajouter ou retirer du fluide dans le circuit de circulation de celui-ci entre la boîte froide et la zone chaude. Le fluide apporté est retiré du réservoir 6. Le fluide retiré est stocké dans le réservoir 6. La pression de fluide dans le réservoir tampon est donc comprise entre la basse pression de fluide se trouvant en amont du compresseur et la haute pression de fluide se trouvant en amont du compresseur.

Le compresseur comprend un élément de compression de fluide entraîné par un moteur, notamment un moteur électrique, comme un moteur asynchrone. Le compresseur comprend un variateur de vitesse du moteur. Par exemple, dans le cas d'un moteur à courant alternatif, ce dernier est de préférence alimenté par le secteur via un convertisseur de fréquence faisant partie du variateur de vitesse. Ainsi, il est possible de faire varier la vitesse de fonctionnement du compresseur et donc la puissance de compression du fluide. Alternativement, notamment dans le cas d'un moteur à courant continu, il est possible de faire varier la vitesse de fonctionnement du compresseur et donc la puissance de compression du fluide en réalisant un découpage du signal d'alimentation du moteur par exemple en utilisant des interrupteurs commandés.

Selon un autre mode de réalisation, on peut utiliser les tiroirs du compresseur pour faire varier et contrôler le débit.

Le fonctionnement de chacun des éléments du compresseur, en particulier du moteur ou de l'alimentation de celui-ci, et de la vanne commandée CV956 est piloté par une unité logique de traitement 7. Le fonctionnement de chacune des vannes commandées CV952 et CV953 peut aussi être piloté par l'unité de traitement.

Le dispositif de compression comprend des éléments matériels et/ou logiciels permettant de régir son fonctionnement, c'est-à-dire de mettre en oeuvre le procédé de commande ou de fonctionnement selon l'invention. Tout ou partie de ces éléments matériels et/ou logiciels sont contenus dans l'unité logique de traitement 7. Les éléments matériels et/ou logiciels comprennent notamment un élément de génération en temps réel d'une commande du compresseur 4 et un élément de génération en temps réel d'une commande de la première vanne commandée CV956.

Les éléments matériels et/ou logiciels peuvent comprendre des éléments logiciels.

Un mode de réalisation du procédé de commande ou de fonctionnement du dispositif de compression, et donc de la machine cryogénique comprenant un tel dispositif de compression, est décrit ci-après.

Pour que le dispositif de compression présente des performances satisfaisantes, ses organes doivent être contrôlés ou commandés par des lois de commandes dite « avancées » ou « à base de modèle ». Pour satisfaire cette contrainte, on utilise un contrôleur ou une loi de commande multi objectifs, lesquels étant :

- assurer des performances maximales quel que soit l'état de sollicitation,
- minimiser la consommation énergétique.

Le système physique constitué par la machine cryogénique ou par le dispositif de compression est du type non linéaire, couplé, saturé par valeur nulle et valeur haute. Ceci constitue un obstacle à la réalisation de ces objectifs.

Il est possible de s'affranchir partiellement de ces obstacles en utilisant, comme vu précédemment, un variateur de vitesse du compresseur, permettant de fixer le débit de fluide adéquat, en temps réel. La vitesse du compresseur peut donc être adaptée à la charge, à chaque instant. Si le débit de fluide compressé est adéquat, alors la vanne de CV956 peut se trouver complètement fermée. Ceci permet de limiter la consommation d'énergie du moteur qui est par exemple proportionnelle à sa vitesse. Si l'on adapte la vitesse en temps réel, on consomme moins que si la vitesse était fixe, et par défaut, nominale.

Un autre avantage apparaît également. Il est possible de faire fonctionner temporairement et/ou dans une certaine limite, le compresseur en surcharge, lorsqu'on utilise un variateur de vitesse à base de convertisseur de fréquence. Il est donc possible d'augmenter la capacité des machines sans avoir à changer le compresseur (dont le coût est de l'ordre de 10 fois supérieur à un variateur de vitesse).

En outre, il faut adapter la vitesse du compresseur à chaque instant. Puisque le compresseur n'est pas le seul organe du dispositif de compression, et que chaque variation de vitesse agit à la fois sur la valeur de pression haute et sur la valeur de pression basse, il est nécessaire de développer une loi de commande multi-objectifs « à base de modèle ».

a.- Pour ce faire, on commande de préférence au moins un organe au travers de sa fonction de transfert statique réciproque. Ainsi, les non linéarités statiques dues aux organes peuvent être supprimées.

b.- De préférence encore, on alloue à au moins un organe une tâche qu'un autre organe ne peut assurer. Ainsi, les saturations des organes peuvent être supprimées, du côté des valeurs basses de leur plage de fonctionnement.

c.- De préférence encore, on pré-positionne au moins un organe dans un état de fonctionnement qu'on considère adapté. Ainsi, on évite des instabilités du système lors de transition de lois de commande.

d.- De préférence enfin, on estime en temps réel au moins une variable non mesurée. Ceci permet en particulier de mettre en oeuvre le pré-positionnement d'au moins un organe dans un état de fonctionnement qu'on considère adapté.

Pour réaliser le contrôleur, on peut mettre en oeuvre n'importe quelle combinaison cohérente d'une, de deux, de trois ou de quatre des propositions a.-, b.-, c.- et d.- ci-dessus.

La combinaison des quatre propositions permet de réaliser un contrôleur linéaire pour le procédé de fonctionnement ou de commande. Il est possible d'utiliser des algorithmes de génération standards (tels que Hinf (Hinfini) et LQG (Linéaire Quadratique Gaussien)). Il est aussi possible d'utiliser de simples algorithmes PI (Proportionnel Intégral), PD (Proportionnel Dérivé) ou PID (Proportionnel Intégral Dérivé). Dans le cas du dispositif de compression, le système est de type « non-carré » (non-square system) car le nombre de variables à réguler est différent du nombre d'organes. De plus, les organes ne sont pas identiques et ont par exemple des vitesses de réaction aux commandes qui sont différentes.

Le fonctionnement du dispositif de compression décrit plus haut en référence à la figure 1 est régi par les équations suivantes :

$$\dot{BP} = \frac{-Q_{prod} + Q_{952} + Q_{BP}}{K_{BP}}$$

$$\dot{HP} = \frac{Q_{prod} - Q_{953} - Q_{HP}}{K_{HP}}$$

Avec KBP et KHP valant respectivement :

$$K_{BP} = \frac{RT}{MV_{BP}}$$

$$K_{HP} = \frac{RT}{MV_{HP}}$$

avec :

VBP le volume sous basse pression vu par le dispositif;
VHP le volume sous haute pression vu par le dispositif;
R la constante des gaz parfaits ;
M la masse molaire du fluide caloporteur ; et
T la température du fluide traité,
ces grandeurs étant exprimées en unités SI (système international).

L'ensemble de lois mathématiques permettant de réaliser le contrôleur linéaire ou la loi de commande linéaire pour piloter le système, s'articule comme représenté à la figure 2. L'unité logique de traitement permettant d'établir les commandes de l'ensemble 31 des organes comprend principalement un observateur 10, un bloc d'allocation 20, un bloc de pré-positionnement 30, un bloc de conversion 40 et un bloc de rétroaction 50.

L'observateur 10 permet de déterminer des estimations des débits entrant et sortant de la boîte froide lorsque ceux-ci ne sont pas mesurés. L'observateur utilise les équations dynamiques du système, les commandes fournies aux organes et des mesures, notamment la valeur de pression HP en aval du compresseur et la valeur de pression BP en amont du compresseur.

Le débit non mesuré QBP est déterminé à l'aide de l'observateur ou estimateur. Les équations du système de la figure 1 sont :

$$\dot{B}P = \frac{+Q_{956} + Q_{952} + QBP - Q_{nc1}}{K_{BP}}$$

$$\dot{H}P = \frac{-Q_{956} + Q_{953} + QHP + Q_{nc1}}{K_{HP}}$$

avec $Q_{prod} = Q_{nc1} - Q_{956}$.

En linéarisant autour d'un point de fonctionnement, le modèle d'état se caractérise par sa matrice d'états A :

$$A = \begin{bmatrix} -\dfrac{N_{nc1_0}K_{nc1_0}}{K_{BP}} + \dfrac{Q_{956_0}}{K_{BP}.HP_0} \\ +\dfrac{N_{nc1_0}K_{nc1_0}}{K_{HP}} - \dfrac{Q_{956_0}}{K_{HP}.HP_0} \end{bmatrix}$$

Et sa matrice d'entrées :

$$B = \begin{bmatrix} \dfrac{1}{K_{BP}} & \dfrac{1}{K_{BP}} & 0 & \dfrac{1}{K_{BP}} & 0 & -\dfrac{1}{K_{BP}} \\ -\dfrac{1}{K_{HP}} & 0 & -\dfrac{1}{K_{HP}} & 0 & -\dfrac{1}{K_{HP}} & \dfrac{1}{K_{HP}} \end{bmatrix}$$

Les deux états sont directement mesurés, la matrice C est donc une matrice identité de taille appropriée. La matrice d'action directe est nulle.

Les débits non mesurés, par exemple QHP et QBP, sont considérés exogènes (leur évolution n'est pas régie par une équation différentielle connue) et afin de pouvoir les estimer, ils seront définis comme des états sensiblement constants dans le temps ($\dot{Q}BP = \dot{Q}HP = 0$). Dans le cas où le débit est mesuré, on peut l'inclure dans le modèle d'état pour pouvoir le filtrer (par exemple QHP) et il devra apparaître dans la matrice de sortie C. Les matrices du modèle d'état de l'observateur sont alors les suivantes :

$$A_0 = \begin{bmatrix} A & B_Q \\ 0_{2,2} & A_Q \end{bmatrix}, \quad B_0 = \begin{bmatrix} B \\ 0_{3,6} \end{bmatrix}$$

$$C_0 = \begin{bmatrix} C & 0_{2,3} \\ 0_{1,4} & 1 \end{bmatrix}, \quad D = \begin{bmatrix} D & 0_{2,3} \end{bmatrix}$$

Dans le premier cas où les débits sont considérés exogènes, on a :

$$A_Q = 0_{2,2} \text{ et } B_0 = \begin{bmatrix} K_{BP}^{-1} & 0 \\ 0 & K_{HP}^{-1} \end{bmatrix}$$

On calcule alors un gain de retour, par exemple grâce à la fonction dare(.) ou place(.) du logiciel Matlab® (après discrétisation). Une fois ce gain connu, l'observateur s'écrit:

$$Q_{952} = K.C_{V952}.P_{eq1}$$

$$Q_{953} = K.C_{V953}.P_{eq2}$$

$$Q_{956} = K.C_{V956}.P_{eq3}$$

Les grandeurs Peq1, Peq2 et Peq3 étant des fonctions de HP, BP et Pcapa.

$$\begin{bmatrix} \dot{\hat{BP}} \\ \dot{\hat{HP}} \\ \dot{\hat{Q}}_{BP} \\ \dot{\hat{Q}}_{HP} \\ \dot{\hat{Q}}_{956} \end{bmatrix} = \begin{bmatrix} \dfrac{+\hat{Q}_{956} + Q_{956} + Q_{952} + \hat{Q}_{BP} - Qnc1}{K_{BP}} \\ \dfrac{-\hat{Q}_{956} - Q_{956} - Q_{953} - \hat{Q}_{HP} + Qnc1}{K_{HP}} \\ 0 \\ 0 \\ 0 \end{bmatrix} + L \left( \begin{bmatrix} BP \\ HP \\ Q_{BP} \end{bmatrix} - \begin{bmatrix} \hat{BP} \\ \hat{HP} \\ \hat{Q}_{BP} \end{bmatrix} \right)$$

avec Qnc1=Knc1.Nnc1. $\hat{BP}$-Knc10.

On obtient un observateur non linéaire, particulièrement adapté à l'utilisation souhaitée.

Le bloc d'allocation 20 permet de réaliser des compensations de commandes entre les organes. Notamment, lorsque les équations dynamiques du système conduisent à prévoir un paramètre ou une variable n'ayant pas de réalité physique, par exemple un débit négatif au travers d'une vanne, la fonction d'allocation compense en ordonnant une configuration équivalente sur le système grâce aux autres organes commandés. Il utilise en entrée des débits, notamment un ou plusieurs débits n'ayant pas de réalité physique et fournit en sortie des valeurs corrigées de débits.

La possibilité de réaliser une telle fonction d'allocation est décrite ci-après. On considère la matrice Bc, matrice de distribution des commandes, le vecteur de commandes u, et le vecteur résultant sur le système v.

$$B_c = \begin{bmatrix} -1 & +1 & 0 \\ +1 & 0 & -1 \end{bmatrix}, \quad u = \begin{bmatrix} Q_{prod} \\ Q_{952} \\ Q_{953} \end{bmatrix}, \quad v = \begin{bmatrix} Q_{952} - Q_{prod} \\ Q_{prod} - Q_{953} \end{bmatrix}$$

Par exemple, nous pouvons remarquer que, si la commande Q952 est négative, il suffit de retrancher, à tous les éléments du vecteur, sa valeur. Ainsi, il vient :

$$u = \begin{bmatrix} Q_{prod} - Q_{952} \\ Q_{952} - Q_{952} \\ Q_{953} - Q_{952} \end{bmatrix} = \begin{bmatrix} Q_{prod} - Q_{952} \\ 0 \\ Q_{953} - Q_{952} \end{bmatrix}, \quad v = \begin{bmatrix} Q_{952} - Q_{prod} \\ Q_{prod} - Q_{953} \end{bmatrix}$$

Le résultat sur le système est le même, la commande négative Q952 a été affecté à d'autres organes. Identiquement, les cas où les deux débits Q952 et Q953 d'apport et de retrait de fluide sont ordonnés positifs au même instant, négatifs au même instant, ou encore de signes opposés, peuvent être gérés.

Ce système peut encore être simplifié en réduisant la matrice Bc à deux colonnes (la première étant une combinaison linéaire des deux suivantes) ce qui correspond au contrôle de deux organes virtuels qui seront transformés en deux organes réels par la fonction d'allocation.

Le bloc de pré-positionnement 30 permet de pré-positionner au moins un organe dans l'état considéré comme adapté. Cela permet le passage d'une loi de commande à une autre sans « brusquer » ou rendre instable le système. En conséquence, le bloc de pré-positionnement peut permettre des variations brusques de la commande d'au moins un organe. Il utilise en entrée des débits, notamment un ou plusieurs débits estimés et fournit en sortie des valeurs de débits.

Les régulateurs usuellement conçus sont des régulateurs linéaires. Ces régulateurs linéaires sont conçus pour être exécutés autour d'un point de fonctionnement. L'initialisation de la valeur de sortie est donc une chose cruciale, puisque le système est saturé de façon positive (ouverture maximale de vanne de 100 %, vitesse maximale du compresseur choisie). Une mise en marche du régulateur avec des valeurs de commande nulles déstabiliserait la boucle. Pour résoudre le problème, on initialise le système aux supposées bonnes valeurs de régulation. Afin de connaître ces valeurs, on résout l'équation statique du système.

$$\dot{BP} = 0 = Q_{952} + Q_{BP} - Q_{prod} \rightarrow Q_{prod} = Q_{952} + Q_{BP}$$

$$\dot{HP} = 0 = Q_{prod} + Q_{953} - Q_{HP} \rightarrow Q_{prod} = Q_{953} + Q_{HP}$$

La solution, pour le débit à compresser Qprod, sous contrainte de positivité des débits, est :

$$\text{Si } Q_{BP} > Q_{HP} \rightarrow Q_{prod} = Q_{BP}$$

$$\text{Si } Q_{HP} > Q_{BP} \rightarrow Q_{prod} = Q_{HP}$$

En posant

$$\Delta Q_{BF} = Q_{953} - Q_{952}$$

La solution est :

Si $AQ_{BF} > 0 \rightarrow Q_{953} = \Delta Q_{BF}, Q_{952} = 0$

Si $\Delta Q_{BF} < 0 \rightarrow Q_{952} = \Delta Q_{BF}, Q_{953} = 0$

Il suffit donc d'ordonner ces débits par défaut sur la machine pour que les pressions soient stables. Le problème est que le débit QBP n'est pas mesuré. Pour résoudre ce problème, on estime le débit QBP.

Le bloc de conversion 40 permet de traduire les débits de fluide souhaités dans le dispositif de compression en commandes applicables par les organes (ouverture de vanne, vitesse du compresseur). Il utilise donc en entrée des débits et fournit en sortie des commandes pour l'ensemble des organes commandés.

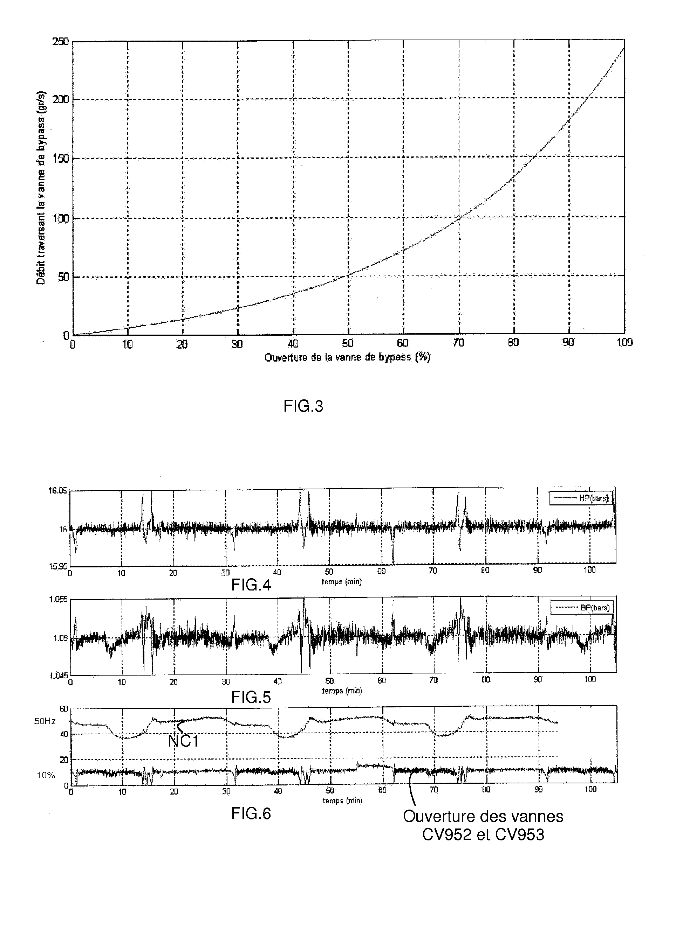

Au niveau des vannes, la forme des non linéarités est connue et strictement monotone. Elle est telle que représentée à la figure 3. La relation liant l'ouverture à sa capacité à laisser passer le fluide s'écrit comme suit :

$$C_V = \frac{C_{V\,\max}}{R_V} \left( \left( e^{\frac{pos}{100} \ln(R_V)} \right) - \left( 1 - \frac{pos}{100} \right) \right)$$

Avec :

pos : l'ouverture de la vanne,

Cv : la capacité à laisser passer le fluide

Il est donc proposé de commander l'état des vannes commandées en utilisant leurs fonctions de transfert statiques réciproques.

Au niveau du compresseur, la vitesse NnC1 du compresseur NC1 agit de manière affine sur le débit Qnc1 selon la relation suivante :

$$Q_{nc1} = K_{nc1} NnC1BP - K_{nc10}$$

Il est donc proposé de commander la vitesse NnC1 au travers de sa fonction de transfert inverse ou réciproque. Si la vitesse du compresseur est trop petite (en dessous d'une valeur critique à laquelle le compresseur ne peut plus fonctionner), on fait fonctionner le compresseur à sa vitesse limite de bon fonctionnement et on ouvre alors de nouveau la vanne CV956 pour qu'elle laisse passer un débit équivalent à celui que le compresseur génère en trop. La commande de la vanne CV956 se fait comme décrit plus haut.

Le bloc de rétroaction 50 permet de compenser les erreurs de modèle et les perturbations non modélisées. Il utilise en entrée des valeurs de paramètres mesurées dans le système et fournit en sortie des valeurs de débits pour le bloc d'allocation. Grâce aux blocs 10, 20, 30, et 40, le bloc de rétroaction peut être conçu grâce aux techniques classiques de placement de pôles, de retour de sortie, de retour d'état, d'optimisation sous contrainte, etc.

Le contrôleur, grâce aux éléments sus-décrits, agira de façon linéaire sur le système. Il pourra donc être généré grâce à des processus linéaires bien connus, et éprouvés, par exemple :

- Commande linéaire quadratique, ou
- Commande Hinfini, ou
- Commande Hinfini adaptative, ou
- Commande par retour de sortie (linéaire, linéaire fractionnaire).

Dans le cas d'un réfrigérateur de grandes dimensions, le dispositif de compression peut comporter au moins deux étages de compression (deux débits d'entrée et un débit de sortie) donc au moins deux compresseurs et plusieurs vannes. Un mode de réalisation d'une machine cryogénique 101 est décrit ci-après en référence à la figure 5.

La machine cryogénique 101 comprend principalement un dispositif de compression 103 d'un fluide caloporteur, comme de l'hélium, et une boîte froide 102 comprenant un détendeur et dans laquelle se trouve une charge thermique à refroidir.

Le dispositif de compression a pour fonction de générer un flux QHP de fluide caloporteur sous haute pression HP. En sortie de la boîte froide, on recueille un flux QBP de fluide caloporteur sous basse pression BP et un flux QMP de fluide caloporteur sous moyenne pression MP. Le dispositif de compression comprend plusieurs organes dont un premier compresseur 104a et un deuxième compresseur 104b montés en série. Le dispositif de compression comprend aussi deux vannes commandée montées chacune hydrauliquement en parallèle de l'un des compresseurs. Eventuellement, les organes du dispositif de compression comprennent encore d'autres vannes commandées et un réservoir 106 de fluide caloporteur.

En utilisant la même méthodologie, le modèle d'état s'écrit alors :

$$\begin{bmatrix} K_{BP} \cdot \dot{BP} \\ K_{MP} \cdot \dot{MP} \\ K_{HP} \cdot \dot{HP} \end{bmatrix} = \begin{bmatrix} 0 & 1 & 1 \\ 1 & -1 & 0 \\ -1 & 0 & -1 \end{bmatrix} \begin{bmatrix} Q_{HP \to MP} \\ Q_{MP \to BP} \\ Q_{HP \to BP} \end{bmatrix} + \begin{bmatrix} -1 & 0 \\ 1 & -1 \\ 0 & 1 \end{bmatrix} \begin{bmatrix} Qcmp1 \\ Qcmp2 \end{bmatrix} + \begin{bmatrix} 1 & 0 & 0 \\ 0 & 1 & 0 \\ 0 & 0 & -1 \end{bmatrix} \begin{bmatrix} Q_{capa \to BP} \\ Q_{MP \to capa} \\ Q_{HP \to capa} \end{bmatrix} + \begin{bmatrix} Q_{BP} \\ Q_{MP} \\ Q_{HP} \end{bmatrix}$$

Des essais ont été réalisés sur un dispositif de compression conforme à l'invention, ce dispositif fonctionnant selon le procédé de l'invention. Ce dispositif permet d'assurer des iso-performances quel que soit l'état de sollicitation du système et de minimiser la consommation énergétique. Des algorithmes traduisant le procédé ont été écrits dans les automates programmables industriels, puis exécutés. Une campagne à charge thermique variable a été menée et les résultats des figures 4 à 6 ont été obtenus.

Les résultats obtenus permettent de se rendre compte que l'objectif d'économie d'énergie a été atteint puisque la vitesse de compression s'est adaptée à la charge tout au long de la variation de celle-ci, comme le montre les évolutions de la fréquence représentées par la courbe supérieure de la figure 6, et que les vannes d'apport et de retrait de fluide (variables CV952 et CV953, en % d'ouverture) ne se sont jamais ouvertes en même temps : elles s'ouvrent l'une après l'autre. On peut également constater que les pressions HP et BP sont restées constantes (ou considérés comme constantes, à la vue des échelles) tout au long des essais. De plus, ces dispositifs sont stables et les performances sont accrues.

Si les pressions sont constantes pendant les essais et que les deux vannes d'apport et de retrait de fluide ne s'ouvrent pas en même temps et que la vanne CV956 est fermée, alors la vitesse du compresseur est adaptée. La consommation d'énergie est donc minimisée.

Pendant ces essais, la vitesse maximale du compresseur a été de 53,15 Hz. La vitesse moyenne a été de 46.44 Hz. L'économie réalisée durant le cycle a été de 12% sur le compresseur (le compresseur représente 2/3 de la consommation globale du système).

Ces essais ont été menés sur une station d'essais cryogénique consommant en charge nominale 330kW. Pour de plus gros besoins, les puissances mises en jeu pour refroidir des charges peuvent aller jusqu'à 10 MW (réacteur à fusion) et même jusqu'à 36 MW.

Pour des besoins en froid non-cryogéniques, les besoins varient énormément. Cela peut aller de quelques centaines de watts (réfrigérateur ménager), à quelques kilowatts (climatisations pour habitat individuel) et jusqu'au mégawatt pour des conditionnements de température d'eau ou d'air collectif.

Egalement, le dispositif de compression permet de réduire les écarts des pressions par rapport à leur consigne. Dans les essais présentés, les pressions ne se sont jamais éloignées de plus de 50mbars (pour la haute pression HP) et 5mbar (pour la basse pression BP) de leur consigne. Avec un système de régulation classique, ces excursions auraient été doubles.

Grâce à un tel dispositif de compression, la taille du compresseur peut être réduite. En effet, les compresseurs à vis destinés à la production du froid industriel fonctionnent avec des pressions d'aspiration variant beaucoup autour de leur valeur moyenne. Or le dimensionnement des machines se fait sur la pression d'aspiration maximale. En régulant la pression d'aspiration à sa valeur moyenne grâce à un algorithme similaire, le compresseur peut ainsi être choisi pour une valeur de pression d'aspiration nominale, et non plus pour une valeur de pression d'aspiration maximale. Son rendement serait également augmenté.

Enfin, le dispositif de compression permet de commander de manière optimale ses organes en régime statique ou variable.

Par « génération en temps réel », on entend par exemple une génération dans un délai fixé, en particulier compris entre 10 ms et 1 s.

Par « estimation en temps réel », on entend par exemple une estimation dans un délai fixé, en particulier compris entre 10 ms et 1 s.

Par « adaptation en temps réel », on entend par exemple une adaptation dans un délai fixé, en particulier compris entre 10 ms et 1 s.

Par « fonction de transfert », on entend une fonction, notamment une fonction mathématique, permettant de lier des première et deuxième grandeurs, en particulier une position de vanne et un débit. La fonction est statique lorsqu'elle est indépendante du temps. Une fonction statique n'est donc pas régie par des équations différentielles.

Une première fonction est une fonction réciproque d'une deuxième fonction si elle permet de déterminer une première grandeur à partir d'une deuxième grandeur, alors que la deuxième fonction permet de déterminer la deuxième grandeur à partir de la première grandeur.

Par « contrôleur linéaire », on entend un contrôleur pouvant être représenté par une fonction linéaire.

Par « observateur non linéaire d'un dispositif », on entend par exemple un observateur connaissant des commandes d'entrée du dispositif et recevant des informations de sortie du dispositif. L'observateur détermine l'état du dispositif à partir d'un modèle du dispositif, le modèle étant décrit par des fonctions non linéaires.

## Revendications

1. Procédé de commande d'un dispositif de compression (3) d'un fluide caloporteur d'une machine cryogénique (1), le dispositif de compression comprenant plusieurs organes dont un compresseur (4) et une première vanne commandée (CV956) montés en parallèle, **caractérisé en ce qu'il** comprend la génération en temps réel d'une commande du compresseur et la génération en temps réel d'une commande de la première vanne commandée.

2. Procédé de commande selon la revendication précédente, **caractérisé en ce que** les organes du dispositif de compression comprennent une deuxième vanne commandée (CV952) et une troisième vanne commandée (CV953), la deuxième vanne commandée, un réservoir (6) de fluide caloporteur et la troisième vanne commandée étant montés en série et faisant partie d'un ensemble monté en parallèle du compresseur et **caractérisé en ce qu'il** comprend la génération en temps réel d'une commande de la deuxième vanne commandée et la génération en temps réel d'une commande de la troisième vanne commandée.

3. Procédé de commande selon l'une des revendications précédentes, **caractérisé en ce que** la génération en temps réel d'au moins une commande d'un organe comprend l'utilisation de la fonction de transfert statique réciproque de l'organe.

4. Procédé de commande selon l'une des revendications précédentes, **caractérisé en ce qu'**on modifie la commande d'un premier organe, lorsqu'un calcul de commande d'un deuxième organe établit une valeur de commande impossible à exécuter.

5. Procédé de commande selon l'une des revendications précédentes, **caractérisé en ce que** la génération en temps réel d'au moins une commande d'un organe comprend l'utilisation d'une estimation d'au moins une valeur d'une variable du dispositif de compression.

6. Procédé de commande selon l'une des revendications précédentes, **caractérisé en ce que** le procédé comprend la génération d'au moins une valeur de commande de prépositionnement.

7. Procédé de commande selon l'une des revendications précédentes, **caractérisé en ce qu'il** comprend l'utilisation d'un contrôleur linéaire.

8. Procédé de commande selon l'une des revendications précédentes, **caractérisé en ce qu'il** comprend l'utilisation d'un observateur non linéaire.

9. Dispositif de compression (3) d'un fluide caloporteur d'une machine cryogénique (1), le dispositif de compression comprenant plusieurs organes dont un compresseur (4) et une première vanne commandée (CV956) montés en parallèle, **caractérisé en ce qu'il** comprend des éléments matériels et/ou logiciels de mise en oeuvre du procédé selon l'une des revendications 1 à 8.

10. Dispositif de compression selon la revendication 9, **caractérisé en ce que** les éléments (7) matériels et/ou logiciels comprennent un élément de génération en temps réel d'une commande du compresseur (4) et un élément de génération en temps réel d'une commande de la première vanne commandée (CV956).

11. Dispositif de compression selon la revendication précédente, **caractérisé en ce qu'il** comprend une deuxième vanne commandée (CV952) et une troisième vanne commandée (CV953), la deuxième vanne commandée, un réservoir de fluide caloporteur et la troisième vanne commandée étant montés en série et faisant partie d'un ensemble monté en parallèle du compresseur et **caractérisé en ce que** les éléments matériels et/ou logiciels comprennent un élément de génération en temps réel d'une commande de la deuxième vanne commandée et un élément de génération en temps réel d'une commande de la troisième vanne commandée.

12. Dispositif de compression selon l'une des revendications 9 à 11, **caractérisé en ce que** les éléments matériels et/ou logiciels comprennent un élément d'utilisation de la fonction de transfert statique réciproque de l'organe.

13. Dispositif de compression selon l'une des revendications 9 à 12, **caractérisé en ce que** les éléments matériels et/ou logiciels comprennent un élément de modification de la commande d'un premier organe lorsqu'un calcul de commande d'un deuxième organe établit une valeur de commande impossible à exécuter par le deuxième organe.

14. Dispositif de compression selon l'une des revendications 9 à 13, **caractérisé en ce que** les éléments matériels et/ou logiciels comprennent un observateur d'au moins une valeur d'une variable du dispositif de compression et/ou **en ce que** les éléments matériels et/ou logiciels comprennent un contrôleur.

15. Machine cryogénique (1) comprenant un dispositif de compression selon l'une des revendications 9 à 14.

FIG.1

FIG.2

FIG.3

FIG.4

FIG.5

FIG.6

Ouverture des vannes
CV952 et CV953

FIG.7

Europäisches
Patentamt

European
Patent Office

Office européen
des brevets

**RAPPORT DE RECHERCHE EUROPEENNE**

Numéro de la demande

EP 13 15 0931

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | FR 2 943 768 A1 (COMMISSARIAT ENERGIE ATOMIQUE [FR]) 1 octobre 2010 (2010-10-01) * page 1, ligne 4 - page 17, ligne 11; figure 1 * ----- | 1-15 | INV. F25B49/02 |
| Y | US 2007/240436 A1 (LANDERS DANIEL [US] ET AL) 18 octobre 2007 (2007-10-18) * alinéas [0009] - [0065]; figure 1 * ----- | 1-15 | |
| Y | WO 2004/010234 A2 (CELERITY GROUP INC [US]) 29 janvier 2004 (2004-01-29) * page 6, ligne 16 - page 47, ligne 9 * ----- | 3,12 | |
| Y | EP 0 179 625 A2 (NIPPON DENSO CO [JP]) 30 avril 1986 (1986-04-30) | 8 | |
| A | * page 29, ligne 15 - page 32, ligne 13 * ----- | 3,12,14 | |

| | DOMAINES TECHNIQUES RECHERCHES (IPC) |
|---|---|
| | F25B G05B |

Le présent rapport a été établi pour toutes les revendications

| Lieu de la recherche | Date d'achèvement de la recherche | Examinateur |
|---|---|---|
| La Haye | 18 mars 2013 | Kolev, Ivelin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 15 0931

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-03-2013

| Document brevet cité au rapport de recherche | | Date de publication | Membre(s) de la famille de brevet(s) | | Date de publication |
|---|---|---|---|---|---|
| FR 2943768 | A1 | 01-10-2010 | EP | 2411745 A1 | 01-02-2012 |
| | | | FR | 2943768 A1 | 01-10-2010 |
| | | | JP | 2012521535 A | 13-09-2012 |
| | | | US | 2012055664 A1 | 08-03-2012 |
| | | | WO | 2010109091 A1 | 30-09-2010 |
| US 2007240436 | A1 | 18-10-2007 | EP | 2013554 A2 | 14-01-2009 |
| | | | US | 2007240436 A1 | 18-10-2007 |
| | | | WO | 2007123795 A2 | 01-11-2007 |
| WO 2004010234 | A2 | 29-01-2004 | AU | 2003253991 A1 | 09-02-2004 |
| | | | CN | 1688948 A | 26-10-2005 |
| | | | EP | 1523701 A2 | 20-04-2005 |
| | | | JP | 4528617 B2 | 18-08-2010 |
| | | | JP | 2005534110 A | 10-11-2005 |
| | | | KR | 20050031109 A | 01-04-2005 |
| | | | TW | I223056 B | 01-11-2004 |
| | | | US | 2004074311 A1 | 22-04-2004 |
| | | | US | 2005223813 A1 | 13-10-2005 |
| | | | US | 2007288180 A1 | 13-12-2007 |
| | | | US | 2009078055 A1 | 26-03-2009 |
| | | | WO | 2004010234 A2 | 29-01-2004 |
| EP 0179625 | A2 | 30-04-1986 | DE | 3576314 D1 | 12-04-1990 |
| | | | EP | 0179625 A2 | 30-04-1986 |
| | | | US | 4696167 A | 29-09-1987 |

EPO FORM P0460

Pour tout renseignement concernant cette annexe : voir Journal Officiel de l'Office européen des brevets, No.12/82

**EP 2 615 394 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943768